# EUROPÄISCHE PATENTSCHRIFT

(11) **EP 1 241 880 B1**
(45) Veröffentlichungstag und Bekanntmachung des Hinweises auf die Patenterteilung: **05.10.2016**
(21) Anmeldenummer: 02004152.1
(22) Anmeldetag: 26.02.2002
(51) Int. Cl.: G09G 3/299, G09G 3/20, H04N 7/01

(54) **Verfahren zur Wiedergabe von PAL-Farbfernsehsignalen mittels einer pulsbreitengesteuerten Bildanzeigevorrichtung**
Method for displaying of PAL colour television signals by means of an image display device using pulse width modulation
Procédé d'affichage de signaux de télévision en couleurs PAL utilisant un dispositif d'affichage d'image avec modulation par largeur d'impulsions

(30) Priorität: 15.03.2001 DE 10112472
(43) Veröffentlichungstag der Anmeldung: 18.09.2002
(73) Patentinhaber: Grundig Multimedia AG, 6362 Stansstad (CH)
(72) Erfinder: Fischbeck, Udo, 90766 Fürth (DE)
(74) Vertreter: Louis Pöhlau Lohrentz

(56) Entgegenhaltungen:
- WO-A-00/10154
- DE-A1- 19 833 597

## Beschreibung

Die Erfindung betrifft ein Verfahren zur Wiedergabe von niederauflösenden Videosignalen, insbesondere Farbfernsehsignalen, mittels einer pulsbreitengesteuerten Bildanzeigenvorrichtung. Weiterhin betrifft die Erfindung ein Fernsehgerät, welches mit einer hochauflösenden pulsbreitengesteuerten Bildanzeigenvorrichtung versehen ist.

Ein derartiges Verfahren kommt beispielsweise bei Plasmadisplays zum Einsatz, welche in Zukunft die bei höherwertigen Fernsehgeräten derzeit noch verwendeten Farbbildröhren ergänzen oder ersetzen werden. Im Zusammenhang mit Farbbildröhren ist der Benutzer hochwertiger Fernsehgeräte seit dem Ende der 80er Jahre aufgrund der 100-Hz-Technologie an eine flackerfreie Darstellung gewöhnt.

Aus der Zeitschrift Radio Fernsehen Elektronik RFE, Heft 2, 1997, Seiten 18-20, ist ein Plasmadisplay bekannt, das aus zwei Glasplatten mit matrixartig angeordneten Elektroden besteht, zwischen denen sich ein Edelgasgemisch befindet. Die Bildinformation wird bei Plasmadisplays nicht zeilenweise dargestellt wie bei Kathodenstahlröhren, sondern vollbildweise. Da bei einem Plasmadisplay die einzelnen Bildpunkte nicht zu beliebigen Zeiten einzeln ein- und ausgeschaltet werden können, muß die Aktivierung der Bildpunkte für das gesamte Display in einem Aktivierungsdurchgang erfolgen.

Die Ansteuerung eines Plasmadisplays erfolgt in mehreren Phasen: einer Adressierungs- oder Initialisierungsphase, einer Halte- oder Aktivierungsphase und einer Löschphase.

In der Adressierungs- oder Initialisierungsphase werden alle Zellen des Plasmadisplays vorgeladen, welche in der darauf folgenden Halte- oder Aktivierungsphase aktiviert werden sollen. Im letzten Schritt, der Löschphase, werden die vorgeladenen Zellen wieder entladen, die Bildinformation wird gelöscht.

Das zur Darstellung eines Fernsehbildes zur Verfügung stehende Zeitintervall wird in Teilzeitintervalle unterschiedlicher Dauer bzw. unterschiedlicher Gewichtung zerlegt, während derer in Abhängigkeit vom Helligkeitswert eines jeweiligen Bildpunktes eine vorgegebene Aktivierungssequenz gewählt wird. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Derartige bekannte Plasmadisplays werden beispielsweise von den Firmen Fujitsu und NEC am Markt vertrieben.

Aus der DE A1 198 33 597 sind ein Verfahren und eine Vorrichtung zur Flimmerreduzierung bei pulsbreitengesteuerten Bildanzeigevorrichtungen bekannt, insbesondere bei einem Farbplasmadisplay. Ein derartiges Farbplasmadisplay dient beispielsweise der Darstellung von Fernsehbildern. Das Farbplasmadisplay wird mittels eines Pulsbreitenmodulators angesteuert, wobei zur Anteuerung die Dauer eines Fernsehbildes in eine Reihe von Teilbildern bzw. Teilzeitintervallen zerlegt wird, die nacheinander dargestellt werden. Zur Flackerreduzierung, insbesondere einer 50-Hz-Flackerreduzierung, wird die Reihenfolge der Teilzeitintervalle und/oder der Aktivierungssequenzen der Teilzeitintervalle derart vorgegeben, dass das Flackern der darzustellenden Bilder minimal ist.

Weiterhin ist aus der DE-A1 198 37 307 eine bewegungsdetektorabhängige Veränderung der Reihenfolge der Teilzeitintervalle bekannt. Beim Vorliegen von Bewegungen wird die Reihenfolge der Teilzeitintervalle derart gewählt, dass Bewegungsartefakte vermieden werden. Ansonsten erfolgt die Wahl der Reihenfolge der Teilzeitintervalle derart; dass 50Hz-Flackerstörungen reduziert werden.

Weiterhin wurde von der Firma Fujitsu im Zusammenhang mit Plasmadisplays die sogenannte ALiS-Technologie entwickelt ("Alternate Lighting of Surfaces"). Mittels dieser können zu geringen Kosten Plasmadisplays mit hoher Auflösung und nicht reduzierter Helligkeit zur Verfügung gestellt werden. Die ALiS-Technologie zeichnet sich dadurch aus, dass der Bildschirm in geradzahlige und ungeradzahlige Zeilen aufgeteilt wird und die Bildanzeige im Sinne eines Zeilensprungverfahrens erfolgt. Weiterhin werden im Unterschied zu herkömmlichen Plasmadisplays die nicht-leuchtenden Bereiche zwischen den Zellen ebenfalls zur Bilddarstellung verwendet und es werden drei Elektroden benutzt, um zwei unterschiedlichen Halbbildern des Zeilensprungsignals angehörende Zeilen anzuzeigen. Bei herkömmlichen Plasmadisplays wurde ein Elektrodenpaar für jede darzustellende Zeile verwendet, wobei zwischen zwei darzustellenden Zeilen ein nicht-leuchtender Bereich vorgesehen ist. Bei der ALiS-Technologie sind die Elektroden äquidistant angeordnet. Jede dieser Elektroden kann entweder mit der darüber angeordneten Elektrode oder mit der darunter angeordneten Elektrode zur Bilddarstellung zusammenwirken, wobei im ersten Halbbild ein Zusammenwirken mit der darüber angeordneten Elektrode und im zweiten Halbbild ein Zusammenwirken mit der darunter angeordneten Elektrode erfolgt.

Nachteilig bei diesen in ALiS-Technologie hergestellten Plasmadisplays ist, dass in den dargestellten Bildern Zeilenflimmern auftritt.

Aus der WO 00/10154 ist ein Verfahren zur Reduzierung von Zeilenflimmern bei in ALiS-Technologie hergestellten Plasmadisplays bekannt. Dazu muss während der Dauer eines Vollbilds mehrmals zwischen einer Darstellung in den ungeradzahligen Zeilen und einer Darstellung in den geradzahligen Zeilen hin- und hergesprungen werden.

Die Aufgabe der Erfindung besteht darin, einen Weg aufzuzeigen, wie die Nachteile aus dem Stand der Technik vermieden werden können.

Diese Aufgabe wird durch ein Verfahren mit den im Anspruch 1 angegebenen Merkmalen und ein Fernsehgerät mit den im Anspruch 5 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass die auf dem Plasmabildschirm angezeigten Bilder zeilenflimmerfrei dargestellt werden.

Weitere vorteilhafte Eigenschaften der Erfindung ergeben sich aus deren beispielhafter Erläuterung anhand der Figuren. Es zeigt:
Figur 1 ein Blockschaltbild zur Erläuterung der grundsätzlichen Funktionsweise eines Femsehgerätes gemäß der Erfindung und
Figur 2 Zeitdiagramme zur Erläuterung der Erfindung.

Die beispielhafte Erläuterung der Erfindung wird anhand von PAL-Signalen vorgenommen. Die Erfindung kann auf sämtliche niederaufgelöste Videosignale, wie z.B. PAL, SECAM, NTSC, usw. angewendet werden.

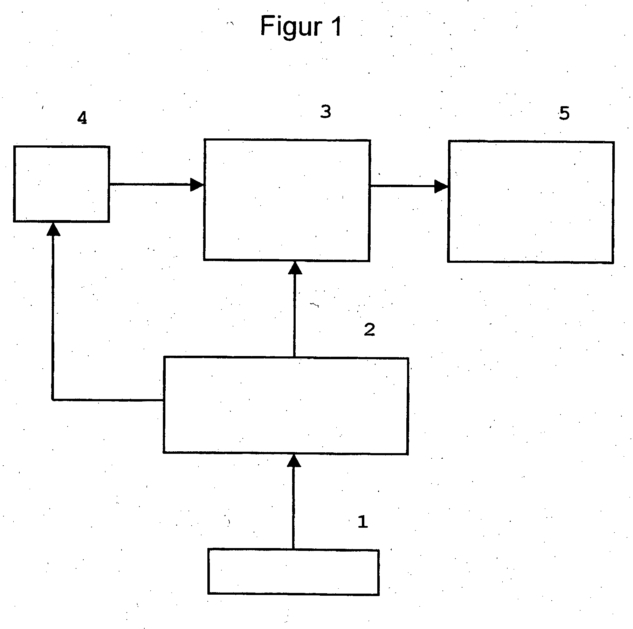

Die Figur 1 zeigt ein Blockschaltbild zur Erläuterung der grundsätzlichen Funktionsweise eines Fernsehgerätes gemäß der Erfindung.

Bei dem in der Figur 1 dargestellten Fernsehgerät handelt es sich um ein Fernsehgerät, welches zur Bildwiedergabe eine pulsbreitengesteuerte, hochauflösende Bildanzeigevorrichtung aufweist, beispielsweise ein Plasmadisplay. Dieses arbeitet nach dem Zeilensprungverfahren. Dabei wird ein Vollbild aus zwei aufeinanderfolgenden Halbbildern zusammengesetzt. Die Dauer eines Halbbildes beträgt 20 ms, die Dauer eines Vollbildes 40 ms. Das Plasmadisplay ist zur Wiedergabe eines Vollbildes mit insgesamt 1024 Zeilen vorgesehen. Folglich weist jedes der beiden Halbbilder 512 Zeilen auf.

Das Fernsehgerät weist eine Empfangseinheit 4 auf, deren Ausgangssignale einem Speicher 3 zugeführt werden. Dessen Speicherkapazität ist so bemessen, dass er zur Abspeicherung der einem Vollbild entsprechenden Daten geeignet ist, d. h. eines Fernsehsignals mit 1024 Zeilen. Es besteht auch die Möglichkeit jede andere Zeilenauflösung zu verwenden.

Die Ausgangssignale des Speichers 3 werden auf der Anzeigevorrichtung 5 dargestellt. Im Rahmen der in der Figur 1 nicht näher dargestellten Signalaufbereitung wird das für eine Bilddarstellung zur Verfügung stehende Zeitintervall in aufeinanderfolgende gewichtete Teilzeitintervalle aufgeteilt. Die den Bildpunkten des darzustellenden Bildes zugehörigen Helligkeitssignale werden durch Umwandlung in den Teilzeitintervallen zugeordnete Aktivierungssequenzen erzeugt.

Zur Steuerung der Empfangseinheit 4 und der Ein- und Auslesevorgänge des Speichers 3 ist eine in Form eines Mikrocomputers realisierte Steuereinheit 2 vorgesehen. Diese umfasst den Senderspeicher des Fernsehgerätes, in welchem programmplatzbezogen die Empfangsdaten gewünschter Fernsehprogramme abgespeichert sind. Wird mittels der Bedieneinheit 1 ein gewünschtes Fernsehprogramm angewählt, dann werden aus dem Senderspeicher die zugehörigen Empfangsdaten ausgelesen und der Empfangseinheit 4 zu deren Abstimmung auf den gewünschten Sender zugeführt.

Vorzugsweise sind im genannten Senderspeicher neben den genannten Empfangsdaten auch weitere, das jeweilige Programm charakterisierende Daten abgespeichert. Zu diesen weiteren Daten gehört auch eine Information über den Fernsehstandard, gemäß welchem das jeweilige Programm übertragen wird. Strahlt der gewünschte Fernsehsender beispielsweise PAL-Signale ab, dann ist am zugehörigen Speicherplatz des Senderspeichers neben den Empfangsdaten auch eine PAL-Kennung abgespeichert.

Erfolgt nun mittels der Bedieneinheit 1 eine Umschaltung auf ein derartiges PAL-Fernsehprogramm, dann steuert der Mikrocomputer 2 den Einlesevorgang der am Ausgang der Empfangseinheit 4 bereitgestellten PAL-FBAS-Signale in den Speicher 3 derart, dass die einem PAL-Vollbild entsprechenden Signale, die in zwei aufeinanderfolgenden Halbbildern mit jeweils 20 ms übertragen werden, in den Speicher 3 eingeschrieben werden.

Weiterhin steuert der Mikrocomputer 2 das Auslesen der abgespeicherten Signale aus dem Speicher 3 derart, dass insgesamt 512 Zeilen eines PAL-Vollbildes entsprechende Signale zeilensprungfrei aus dem Speicher ausgelesen werden und ein Halbbild des hochauflösenden Anzeigesignals bilden. Dies bedeutet, dass die aus zwei Halbbildern des PAL-Signals abgeleiteten 512 Zeilen eines PAL-Vollbildes nunmehr in einem Halbbild des hochauflösenden Signals übertragen werden, d. h. in einer Zeitdauer von 20 ms. Diese 512 Zeilen eines PAL-Vollbildes bilden weiterhin auch das zweite Halbbild des hochauflösenden Signals. Folglich werden die genannten 512 Zeilen jedes PAL-Vollbilds zweimal aus dem Speicher 3 ausgelesen. Die restlichen Zeilen des PAL-Vollbildes liegen im Overscan-Bereich und werden nicht auf dem Bildschirm dargestellt.

Der Auslesevorgang der Signale aus dem Speicher 3 wird vom Mikrocomputer derart gesteuert, dass die Reihenfolge der Übertragung der gewichteten Teilzeitintervalle und/oder die Aktivierungssequenzen der Teilzeitintervalle während der Dauer eines Vollbildes des hochauflösenden Signals derart vorgegeben werden, dass sowohl das Zeilenflimmern als auch das Großflächenflimmern reduziert ist.

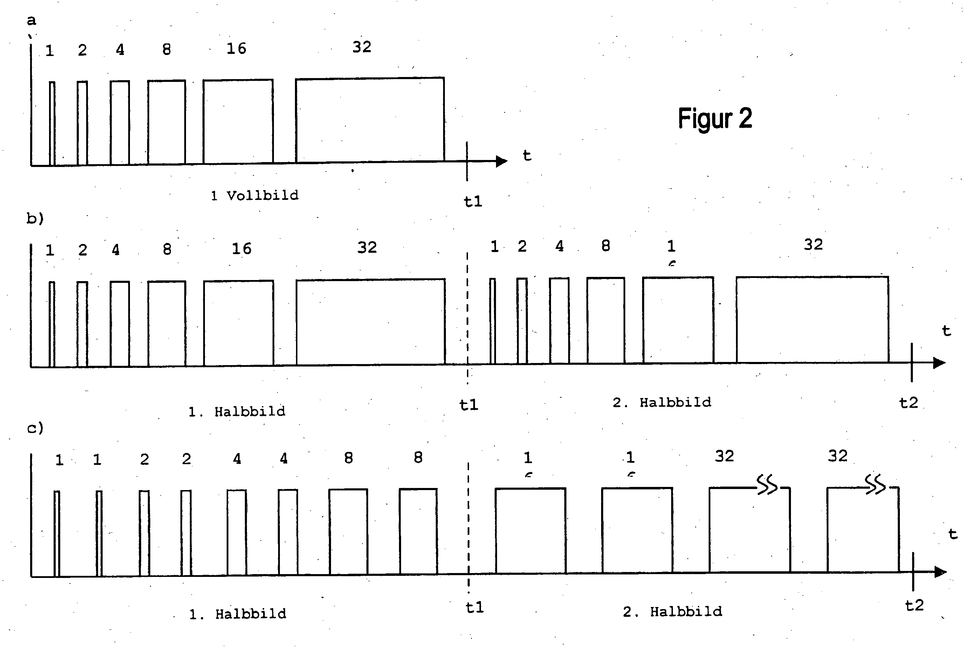

Dies wird nachfolgend anhand der Figur 2 näher erläutert, welche Zeitdiagramme zur Erläuterung der Erfindung zeigt.

In der Figur 2a ist die bei herkömmlichen Plasmadisplays verwendete Aufteilung des für eine Wiedergabe eines Vollbildes zur Verfügung stehenden Zeitintervalles in aufeinanderfolgende gewichtete Teilzeitintervalle dargestellt. Die Dauer t1 eines Vollbildes, welches zeilensprungfrei dargestellt wird, beträgt 20 ms.

Die Figur 2b zeigt die bei Plasmadisplays in ALiS-Technologie verwendete Aufteilung des für eine Wiedergabe eines Vollbildes zur Verfügung stehenden Zeitintervalles in zwei Halbbilder. Jedes dieser Halbbilder hat eine Dauer von 20 ms, so dass die Vollbilddauer eines in ALiS-Technologie hergestellten Plasmadisplays 40 ms beträgt. Jedes der Halbbilder ist in aufeinanderfolgende gewichtete Teilzeitintervalle aufgeteilt. Ein Nachteil einer Bilddarstellung im Sinne der Aufteilung der Teilzeitintervalle gemäß Figur 2b besteht darin, dass die dargestellten Bilder ein Zeilenflimmern aufweisen.

Dieses Zeilenflimmern lässt sich gemäß der vorliegenden Erfindung dadurch vermeiden, dass Teilzeitintervalle, die gemäß der ALiS-Technologie in verschiedenen Halbbildern angeordnet sind, über die gesamte Dauer eines Vollbildes derart miteinander vermischt werden, dass das Zeilenflimmern reduziert ist.

Dies ist in der Figur 2c veranschaulicht. Diese zeigt, dass die gemäß herkömmlicher ALiS-Technologie in unterschiedlichen Halbbildern enthaltenen Teilzeitintervalle gleicher Gewichtung nunmehr nicht mehr grundsätzlich verschiedenen Halbbildern angehören, sondern miteinander vermischt sind. Beispielsweise sind beide Teilzeitintervalle mit der Gewichtung 4 nunmehr im ersten Halbbild enthalten und beide Teilzeitintervalle mit der Gewichtung 32 nunmehr im zweiten Halbbild.

Bei der Aufteilung der Teilzeitintervalle gemäß Figur 2c ist im wiedergegebenen Bild das Zeilenflimmern reduziert.

In vorteilhafter Weise wird der Lösungsgedanke gemäß Figur 2c dadurch weitergebildet, dass auch die Reihenfolge der unterschiedlich gewichteten Teilzeitintervalle und/oder die Aktivierungssequenzen der Teilzeitintervalle verändert werden, um zusätzlich ein Auftreten von Großflächenflimmern zu vermeiden. Wie dies geschehen kann, ist beispielsweise in der WO 00/07173 der Anmelderin offenbart.

## Patentansprüche

1. Verfahren zur Wiedergabe von niederaufgelösten Videosignalen mittels einer pulsbreitengesteuerten hochauflösenden Bildanzeigevorrichtung (5), bei welchem die Bilddarstellung mittels zweier gemäß dem Zeilensprungverfahren aufeinanderfolgender hochauflösender Halbbilder vorgenommen wird und das für eine Bilddarstellung eines jeweiligen Halbbilds zur Verfügung stehende Zeitintervall in aufeinanderfolgende gewichtete Teilzeitintervalle aufgeteilt wird, bei weichem die zwei aufeinanderfolgenden hochauflösenden Halbbilder ein hochauflösenden Vollbild mit insgesamt je zwei Teilzeitintervallen mit den Gewichtungen 1, 2, 4, 8, 16, 32 bilden, und bei welchem die den Bildpunkten des darzustellenden Bildes zugehörigen Helligkeitssignale durch den Teilzeitintervallen zugeordnete Aktivierungssequenzen erzeugt werden, **dadurch gekennzeichnet, dass**
- einem niederaufgelösten Vollbild entsprechende Signale, die in zwei aufeinanderfolgenden niederaufgelösten Halbbildern eines empfangenen niederaufgelösten Videosignals übertragen werden, in einem Speicher (3) abgespeichert werden, und
- die dem Vollbild des niederaufgelösten Videosignals entsprechenden Signale zur Bildung der beiden hochauflösenden Halbbilder aus dem Speicher (3) ausgelesen werden, wobei das erste Halbbild des hochauflösenden Signals und auch das zweite Halbbild des hochauflösenden Signals durch das aus dem niederaufgelösten Signal gebildete Vollbild gebildet werden, wobei die Reihenfolge der Übertragung der gewichteten Teilzeitintervalle und/oder die Aktivierungssequenzen der Teilzeitintervalle während der Dauer eines Vollbildes des hochauflösenden Signals derart vorgegeben wird, dass die jeweils zwei Teilzeitintervalle der Gewichtungen 1, 2, 4 und 8 dem einen hochauflösenden Halbbild zugeordnet werden, und dass die jeweils zwei Teilzeitintervalle der Gewichtungen 16 und 32 dem anderen hochauflösenden Halbbild zugeordnet werden, wodurch ein Zeilenflimmern reduziert wird.

2. Verfahren nach Anspruch 1,
**dadurch gekennzeichnet, dass**
das niederaufgelöste Videosignal ein PAL-Farbfernsehsignal, ein SECAM-Farbfernsehsignal oder ein NTSC-Farbfernsehsignal ist.

3. Verfahren nach Anspruch 1 oder 2,
**dadurch gekennzeichnet, dass**
das auf der Bildanzeigevorrichtung (5) dargestellte Vollbild 1024 Zeilen aufweist.

4. Verfahren nach einem der Ansprüche 1 bis 3,
**dadurch gekennzeichnet, dass**
das auf der hochauflösenden Bildanzeigevorrichtung (5) dargestellte Vollbild eine Zeitdauer von 40 ms aufweist.

5. Fernsehgerät, welches mit einer pulsbreitengesteuerten hochauflösenden Bildanzeigevorrichtung (5) versehen ist und nach dem Zeilensprungverfahren arbeitet,
welches so eingerichtet ist, dass
- die Bilddarstellung mittels zweier gemäß dem Zeilensprungverfahren aufeinanderfolgender hochauflösender Halbbilder stattfindet,
- das für eine Bilddarstellung eines jeweiligen Halbbilds zur Verfügung stehende Zeitintervall in aufeinanderfolgende gewichtete Teilzeitintervalle aufgeteilt wird,
- die zwei aufeinanderfolgenden hochauflösenden Halbbilder ein hochauflösendes Vollbild mit insgesamt je zwei Teilzeitintervallen mit den Gewichtungen 1, 2, 4, 8, 16, 32 bilden, und
- die den Bildpunkten des darzustellenden Bildes zugehörigen Helligkeitssignale durch den Teilzeitintervallen zugeordnete Aktivierungssequenzen erzeugt werden,
mit
- einer Steuereinheit (2) und
- einem Speicher (3),
**dadurch gekennzeichnet, dass**
- das Fernsehgerät eine Betriebsart aufweist, in welcher niederaufgelöste Videosignale auf der hochauflösenden Bildanzeigevorrichtung (5) wiedergebbar sind,
- die Steuereinheit (2) derart ausgebildet ist, dass in der Betriebsart mittels der Steuereinheit (2) ein Abspeichern von einem niederaufgelösten Vollbild entsprechenden Signalen aus zwei aufeinanderfolgenden niederaufgelösten Halbbildern eines empfangenen niederaufgelösten Videosignals im Speicher (3) und ein nachfolgendes Auslesen der dem niederaufgelösten Vollbild entsprechenden Signale aus dem Speicher (3) gesteuert werden, wobei die dem Vollbild des niederaufgelösten Videosignals entsprechenden Signale zur Bildung sowohl des ersten als auch des zweiten hochauflösenden Halbbilds aus dem Speicher (3) ausgelesen werden, und
- die Steuereinheit (2) derart ausgebildet ist, dass die Reihenfolge der Übertragung der gewichteten Teilzeitintervalle und/oder die Aktivierungssequenzen der Teilzeitintervalle während der Dauer eines Vollbildes des hochauflösenden Signals mittels der Steuereinheit (2) derart vorgegeben werden, dass die jeweils zwei Teilzeitintervalle der Gewichtungen 1, 2, 4 und 8 dem einen hochauflösenden Halbbild zugeordnet werden, und dass die jeweils zwei Teilzeitintervalle der Gewichtungen 16 und 32 dem anderen hochauflösenden Halbbild zugeordnet werden, wodurch ein Zeilenflimmern reduziert wird.

6. Fernsehgerät nach Anspruch 5,
**dadurch gekennzeichnet, dass**
das niederaufgelöste Videosignal ein PAL-Farbfernsehsignal, ein SECAM-Ferbfernsehsignal oder ein NTSC-Farbfernsehsignal ist.

## Claims

1. Method for the playback of low-resolution video signals by means of a pulse-width-modulated high-resolution image display device (5), wherein the image display is undertaken by means of two consecutive high-resolution fields in accordance with interlaced scanning and the time period available for an image display of a respective field is divided into consecutive weighted partial time periods, wherein the two consecutive high-resolution fields form a high-resolution full screen with a total of two partial time periods each with the weightings 1, 2, 4, 8, 16, 32, and wherein the brightness signals belonging to the pixels of the image to be displayed are produced by the activation sequences assigned to the partial time periods,
**characterised in that**
- signals corresponding to a low-resolution full screen, said signals being transferred into two consecutive low-resolution fields of a received low-resolution video signal, are saved in a store (3), and
- the signals corresponding to the full screen of the low-resolution video signal are selected from the store (3) for the formation of the two high-resolution fields, wherein the first field of the high-resolution signal and the second field of the high-resolution signal are formed by the full screen formed from the low-resolution signal, wherein the transfer sequence of the weighted partial time periods and/or the activation sequences of the partial time periods is predetermined for the duration of a full screen of the high-resolution signal in such a way that the two respective partial time periods of the weightings 1, 2, 4 and 8 are assigned to one high-resolution field and the two respective partial time periods of weightings 16 and 32 are assigned to the other high-resolution field, whereby line flickering is reduced.

2. Method according to claim 1,
**characterised in that**
the low-resolution video signal is a PAL colour television signal, a SECAM colour television signal or an NTSC colour television signal.

3. Method according to claim 1 or 2,
**characterised in that**
the full screen presented on the image display device (5) has 1024 lines.

4. Method according to one of claims 1 to 3,
**characterised in that**
the full screen presented on the high-resolution image display device (5) has a duration of 40ms.

5. Television which is provided with a pulse width modulated high-resolution image display device (5) and works in accordance with interlaced scanning,
which is configured in such a way that
- image display takes place by means of two consecutive high-resolution fields in accordance with interlaced scanning,
- the time period available for an image display of a respective field is divided into consecutive weighted partial time periods,
- the two consecutive high-resolution fields form a high-resolution full screen having a total of two partial time periods each with the weightings 1, 2, 4, 8, 16, 32, and
- the brightness signals belonging to the pixels of the image to be displayed are produced by the activation sequences assigned to the partial time periods,
having
- a control unit (2) and
- a store (3),
**characterised in that**
- the television has an operating mode in which low-resolution video signals are able to be played back on the high-resolution image display device (5),
- the control unit (2) is formed in such a way that a storing of signals corresponding to a low-resolution full screen from two consecutive low-resolution fields of a received low-resolution video signal in the store (3) and a subsequent selection of the signals corresponding to the low-resolution full screen from the store (3) are controlled in the operating mode by means of the control unit (2), wherein the signals corresponding to the full screen of the low-resolution video signal are selected from the store (3) for the formation of both the first and the second high-resolution field, and
- the control unit (2) in formed in such a way that the transfer sequence of the weighted partial time periods and/or the activation sequences of the partial time periods are predetermined by means of the control unit (2) for the duration of a full screen of the high-resolution signal in such a way that the two respective partial time periods of the weightings 1, 2, 4 and 8 are assigned to one high-resolution field and the two respective partial time periods of weightings 16 and 32 are assigned to the other high-resolution field, whereby line flickering is reduced.

6. Television according to claim 5,
**characterised in that**
the low-resolution video signal is a PAL colour television signal, a SECAM colour television signal or an NTSC colour television signal.

## Revendications

1. Procédé de reproduction de signaux vidéo basse résolution au moyen d'un dispositif d'affichage d'images (5) haute résolution commandé par largeur d'impulsions, dans lequel la représentation d'images est entreprise au moyen de deux demi-images haute résolution qui se suivent conformément à l'entrelacement, et l'intervalle de temps disponible pour une représentation d'images d'une demi-image respective est divisé en intervalles de temps partiels pondérés qui se suivent, dans lequel les deux demi-images haute résolution qui se suivent forment une image pleine haute résolution avec au total respectivement deux intervalles de temps partiels avec les pondérations 1, 2, 4, 8, 16, 32, et dans lequel les signaux de luminance appartenant aux pixels de l'image à représenter sont produits par des séquences d'activation affectées aux intervalles de temps partiels,
**caractérisé en ce que**
- des signaux correspondant à une image pleine basse résolution qui sont transmis dans deux demi-images basse résolution d'un signal vidéo basse résolution reçu qui se suivent sont enregistrés dans une mémoire (3), et
- les signaux correspondant à l'image pleine du signal vidéo basse résolution pour la formation des deux demi-images haute résolution sont extraits de la mémoire (3), la première demi-image du signal vidéo haute résolution et également la deuxième demi-image du signal haute résolution étant formées par l'image pleine formée à partir du signal basse résolution, la succession de la transmission des intervalles de temps partiels pondérés et/ou les séquences d'activation des intervalles de temps partiels pendant la durée d'une image pleine du signal haute résolution étant spécifiées de telle sorte que les respectivement deux intervalles de temps partiels des pondérations 1, 2, 4 et 8 sont affectés à une demi-image haute résolution, et **en ce que** les respectivement deux intervalles de temps partiels des pondérations 16 et 32 sont affectés à l'autre demi-image haute résolution, ce qui réduit un scintillement des lignes.

2. Procédé selon la revendication 1,
**caractérisé en ce que**
le signal vidéo basse résolution est un signal de télévision en couleurs PAL, un signal de télévision en couleurs SECAM ou un signal de télévision en couleur NTSC.

3. Procédé selon la revendication 1 ou 2,
**caractérisé en ce que**
l'image pleine représentée sur le dispositif d'affichage d'images (5) présente 1 024 lignes.

4. Procédé selon l'une des revendications 1 à 3,
**caractérisé en ce que**
l'image pleine représentée sur le dispositif d'affichage d'images (5) haute résolution présente une durée de 40 ms.

5. Téléviseur, qui est muni d'un dispositif d'affichage d'images (5) haute résolution commandé par largeur d'impulsions, et qui fonctionne conformément à l'entrelacement,
qui est agencé de telle sorte que
- la représentation d'images a lieu au moyen de deux demi-images haute résolution qui se suivent conformément à l'entrelacement,
- l'intervalle de temps disponible pour une représentation d'images d'une demi-image respective est divisé en intervalles de temps partiels pondérés qui se suivent,
- les deux demi-images haute résolution qui se suivent forment une image pleine haute résolution avec au total respectivement deux intervalles de temps partiels avec les pondérations 1, 2, 4, 8, 16, 32, et
- les signaux de luminance appartenant aux pixels de l'image à représenter sont produits par des séquences d'activation affectées aux intervalles de temps partiels,
avec
- une unité de commande (2) et
- une mémoire (3),
**caractérisé en ce que**
- le téléviseur présente un mode de fonctionnement dans lequel des signaux vidéo basse résolution peuvent être reproduits sur le dispositif d'affichage d'images (5) haute résolution,
- l'unité de commande (2) est constituée de telle sorte que, dans le mode de fonctionnement au moyen de l'unité de commande (2), un enregistrement dans la mémoire (3) de signaux correspondant à une image pleine basse résolution et provenant de deux demi-images qui se suivent d'un signal vidéo basse résolution reçu et une extraction ultérieure à partir de la mémoire (3) des signaux correspondant à l'image pleine basse résolution sont commandés, les signaux correspondant à l'image pleine du signal vidéo basse résolution étant extraits de la mémoire (3) pour la formation aussi bien de la première que de la deuxième demi-image haute résolution, et
- l'unité de commande (2) est constituée de telle sorte que la succession de la transmission des intervalles de temps partiels pondérés et/ou les séquences d'activation des intervalles de temps partiels pendant la durée d'une image pleine du signal haute résolution sont spécifiées au moyen de l'unité de commande (2) de telle sorte que les respectivement deux intervalles de temps partiels des pondérations 1, 2, 4, et 8 sont affectés à une demi-image haute résolution, et **en ce que** les respectivement deux intervalles de temps partiels des pondérations 16 et 32 sont affectés à l'autre demi-image haute résolution, ce qui réduit un scintillement des lignes.

6. Téléviseur selon la revendication 5,
**caractérisé en ce que**
le signal vidéo basse résolution est un signal de télévision en couleurs PAL, un signal de télévision en couleurs SECAM ou un signal de télévision en couleur NTSC.
